# EUROPEAN PATENT APPLICATION

(11) **EP 2 784 612 A2**
(43) Date of publication of application: **01.10.2014**
(21) Application number: 14157190.1
(22) Date of filing: 28.02.2014
(51) Int. Cl.: G05B 19/418, B25J 9/16

(54) **Robot system and robot working method**

(30) Priority: 14.03.2013 JP 2013051108
(71) Applicant: Kabushiki Kaisha Yaskawa Denki, Kitakyushu-shi, Fukuoka 806-0004 (JP)
(72) Inventor: Miyahara, Jun, Kitakyushu-shi, Fukuoka 806-0004 (JP); Tomo, Toshihiro, Kitakyushu-shi, Fukuoka 806-0004 (JP); Imasato, Yasuhiro, Kitakyushu-shi, Fukuoka 806-0004 (JP)
(74) Representative: Viering, Jentschura & Partner Patent- und Rechtsanwälte

(57) **Abstract**

A robot system 100 includes a robot 1a, 1b, a synchronous movable body 2a, 2b, and a controller 15a, 15b. The robot 1a, 1b performs a predetermined work with respect to a workpiece placed on a carriage 201 moving along a predetermined runway 3. The synchronous movable body 2a, 2b moves along the predetermined runway 3 synchronously with movement of the carriage 201. The synchronous movable body 2a, 2b includes a position detector 22a, 22b to detect a position of the carriage 201 on the predetermined runway 3. The controller 15a, 15b controls the robot 1a, 1b to perform the predetermined work with respect to the workpiece placed on the carriage 201 synchronously with the movement of the carriage 201 based on the detected position of the carriage 201 on the predetermined runway 3.

## Description

### BACKGROUND OF THE INVENTION

### FIELD OF THE INVENTION

The present invention relates to a robot system and a robot working method.

### DISCUSSION OF THE BACKGROUND

Japanese Unexamined Patent Application Publication No. 2010-280010 discloses a robot system that includes a robot that puts an object into a container while the container is carried on a conveyor. In this robot system, the conveyor is equipped with an encoder to detect a displacement of the conveyor. The displacement of the conveyor detected by the encoder (that is, position of the container) is input into a robot control apparatus from the conveyor. Then, based on the input movement of the conveyor, the robot puts the object into the container synchronously with movement of the conveyor (that is, the movement of the container).

The contents of Japanese Unexamined Patent Application Publication No. 2010-280010 are incorporated herein by reference in their entirety.

In the robot system recited in Japanese Unexamined Patent Application Publication No. 2010-280010, the robot is brought into operation synchronously with the movement of the conveyor (container) based on the displacement of the conveyor detected by the conveyor itself while conveying the object (workpiece). When the workpiece is placed on a carriage or a similar vehicle that is unable to detect its own displacement (position), the robot may be difficult to operate synchronously with the movement of the carriage.

The present disclosure has been made in view of the above-described circumstances, and it is an object of the present invention to provide a robot system and a robot working method that brings the robot into operation synchronously with the movement of the carriage even when the carriage is unable to detect its own position.

### SUMMARY

According to one aspect of the present disclosure, a robot system 100 includes a robot 1a, 1b, a synchronous movable body 2a, 2b, and a controller 15a, 15b. The robot 1a, 1b is configured to perform a predetermined work with respect to a workpiece placed on at least one carriage 201 of one or more carriages moving along a predetermined runway 3. The synchronous movable body 2a, 2b is configured to move along the predetermined runway 3 synchronously with movement of the at least one carriage 201. The synchronous movable body 2a, 2b includes a position detector 22a, 22b configured to detect a position of the at least one carriage 201 on the predetermined runway 3. The controller 15a, 15b is configured to control the robot 1a, 1b to perform the predetermined work with respect to the workpiece placed on the at least one carriage 201 synchronously with the movement of the at least one carriage 201 based on the detected position of the at least one carriage 201 on the predetermined runway 3.

With the robot system according to the one aspect of the present disclosure, as described above, the synchronous movable body moves along a predetermined runway synchronously with movement of a carriage, and includes a position detector to detect a position of the carriage 201 on the predetermined runway. Since the synchronous movable body detects the position of the carriage, the robot readily performs a predetermined work with respect to a workpiece placed on the carriage synchronously with the movement of the carriage even when the carriage is unable to detect its own position.

According to another aspect of the present disclosure, a robot working method includes moving a synchronous movable body 2a, 2b along a predetermined runway 3 synchronously with movement of a carriage 201 along the predetermined runway 3 so as to detect a position of the carriage 201 on the predetermined runway 3. The synchronous movable body 2a, 2b includes a position detector 22a, 22b. A robot 1a, 1b is controlled to perform a predetermined work with respect to a workpiece placed on the carriage 201 synchronously with the movement of the carriage 201 based on the detected position of the carriage 201 on the predetermined runway 3.

As described above, the robot working method according to the other aspect of the present disclosure includes moving a synchronous movable body along a predetermined runway synchronously with movement of a carriage along the predetermined runway so as to detect a position of the carriage on the predetermined runway. Since the synchronous movable body detects the position of the carriage, the robot working method ensures that the robot readily performs a predetermined work with respect to a workpiece placed on the carriage synchronously with the movement of the carriage even when the carriage is unable to detect its own position.

The above-described configurations ensure that the robot performs work synchronously with the movement of the carriage even when the carriage is unable to detect its own position.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a perspective view of a robot system according to one embodiment;
FIG. 2 is a plan view of the robot system according to the embodiment;
FIG. 3 is a perspective view of a non-self-movable carriage;
FIG. 4 is a perspective view of a self-movable carriage;
FIG. 5 is a perspective view of a robot of the robot system according to the embodiment;
FIG. 6 is a plan view of a synchronous movable body of the robot system according to the embodiment;
FIG. 7 is a block diagram of the robot system according to the embodiment;
FIG. 8 is a plan view of a synchronous movable body towing the non-self-movable carriage;
FIG. 9 is a plan view of the synchronous movable body moving synchronously with the self-movable carriage;
FIG. 10 is a flowchart of operations of the robot system according to the embodiment;
FIG. 11 illustrates a state in which the robot of the robot system according to the embodiment takes out a workpiece;
FIG. 12 illustrates a state in which the robot of the robot system according to the embodiment places the taken workpiece onto a stand; and
FIG. 13 is a plan view of a modification of the synchronous movable body according to the embodiment.

### DESCRIPTION OF THE EMBODIMENTS

The embodiments will now be described with reference to the accompanying drawings, wherein like reference numerals designate corresponding or identical elements throughout the various drawings.

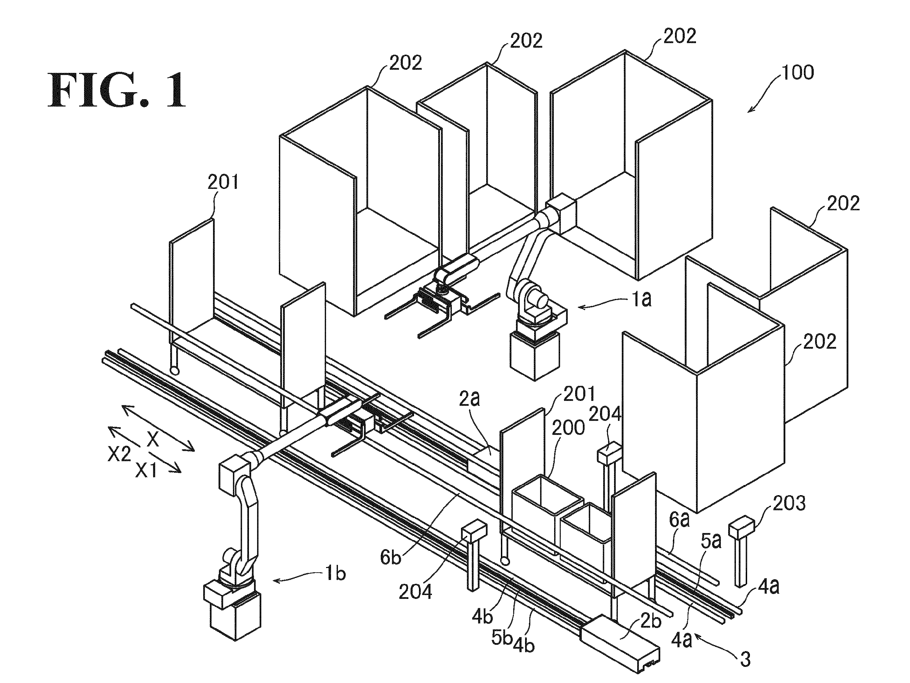

First, a configuration of a robot system 100 according to this embodiment will be described by referring to FIGs. 1 to 9.

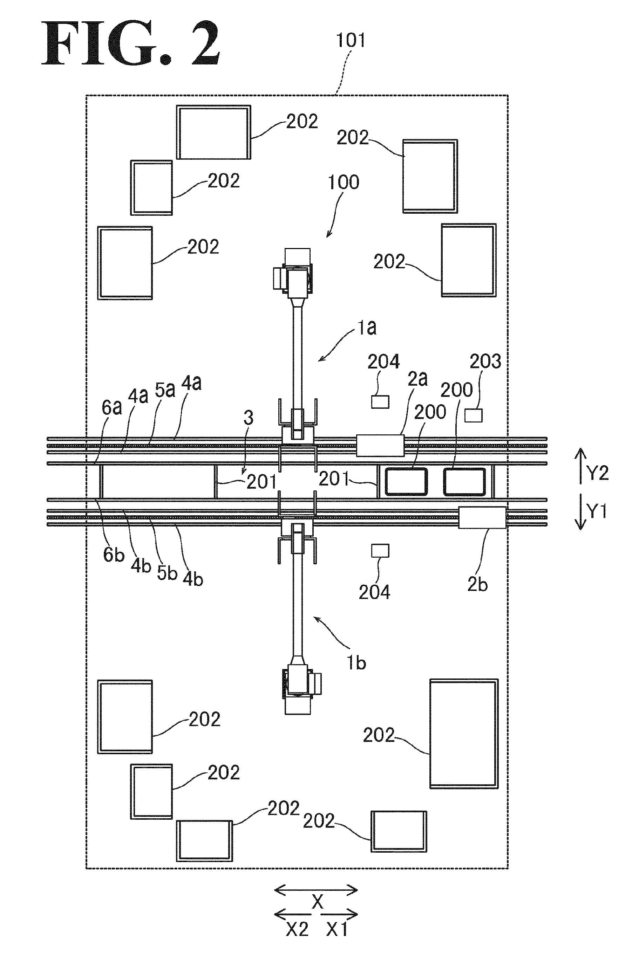

As shown in FIGs. 1 and 2, the robot system 100 includes two robots 1a and 1b and two synchronous movable bodies 2a and 2b. The synchronous movable bodies 2a and 2b are examples of the "first synchronous movable body" and also examples of the "second synchronous movable body".

The two robots 1a and 1b are respectively disposed on one side and the other side of a runway 3 (which is defined between two guides 6a and 6b in plan view, described later) for a carriage 201, on which a workpiece 200 (for example, a box) is placed. Also, a plurality of stands 202 are disposed behind the robots 1a and 1b The workpiece 200 is placed on each of the plurality of stands 202. A camera 203 is disposed in the vicinity of the arrow X1 direction side of the runway 3, which is the direction in which the carriage 201 moves (that is, the camera 203 is disposed in the vicinity of the entrance side of the runway 3 from which the carriage 201 enters the runway 3). The camera 203 captures an image of an arrangement state of the workpiece 200 placed on the carriage 201. A sensor 204 is disposed in the vicinity of the arrow X1 direction side of the runway 3, which is the direction in which the carriage 201 moves (that is, the sensor 204 is disposed in the vicinity of the entrance side of the runway 3 from which the carriage 201 enters the runway 3). The sensor 204 detects that the carriage 201 has reached a predetermined position on the runway 3. Examples of the sensor 204 include, but are not limited to, a light sensor to detect that light emitted from the sensor 204 has been shielded by the carriage 201, and thereby detect that the carriage 201 has reached a synchronization start position (which is a position at which the robots 1a and 1b start work synchronously with the movement of the carriage 201) on the runway 3.

Two rod shaped guides 4a and a rack 5a are disposed on one side of the runway 3 for the carriage 201 (that is, on the arrow Y2 direction side). The rod shaped guides 4a guide the movement of a synchronous movable body 2a. The rack 5a is engaged with a pinion (not shown) disposed in the synchronous movable body 2a. Thus, the synchronous movable body 2a moves on the guides 4a and the rack 5a along the runway 3 for the carriage 201. On the other side of the runway 3 for the carriage 201 (that is, on the arrow Y1 direction side), two rod shaped guides 4b and a rack 5b are disposed. The two rod shaped guides 4b guide the movement of a synchronous movable body 2b. The rack 5b is engaged with a pinion (not shown) disposed in the synchronous movable body 2b. Thus, the synchronous movable body 2b moves on the guides 4b and the rack 5b along the runway 3 for the carriage 201. Also, two rod shaped guides 6a and 6b are disposed on each side of the runway 3 for the carriage 201. The two rod shaped guides 6a and 6b guide the movement of the carriage 201.

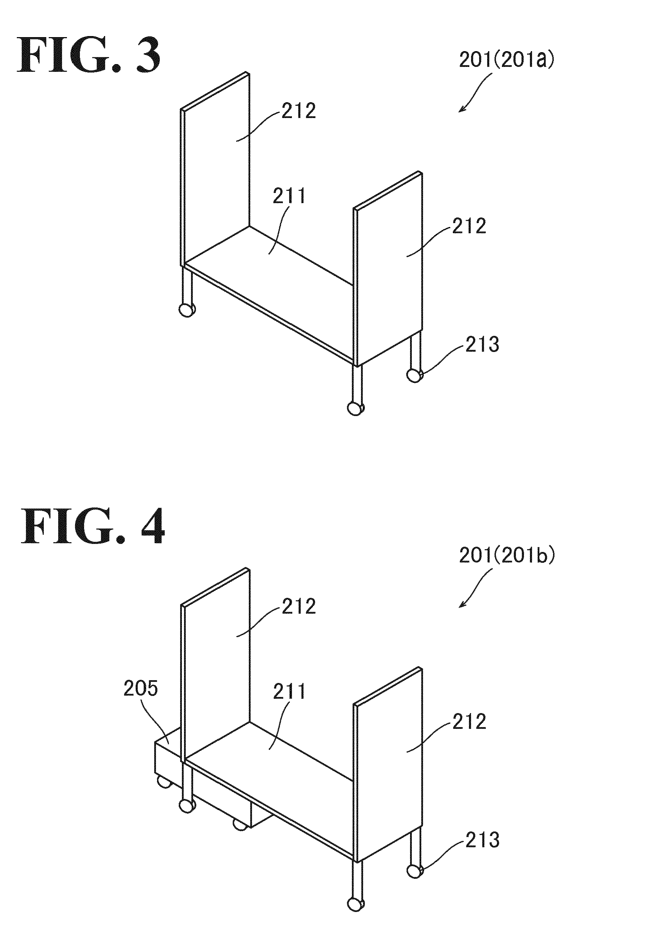

As shown in FIGs. 3 and 4, the carriage 201 includes a base 211, two walls 212, and wheels 213. The workpiece 200 is placed on the base 211. The two walls 212 each extend vertically. Here, in this embodiment, the carriage 201 includes a non-self-movable carriage 201a (see FIG. 3) and a self-movable carriage 201b (see FIG. 4). The non-self-movable carriage 201a is driven into operation, while the self-movable carriage 201b is capable of self-movement. As shown in FIG. 4, the self-movable configuration of the self-movable carriage 201b is made possible by mounting a towing device 205 as propeller, which is capable of self-movement along a predetermined route. The non-self-movable carriage 201a and the self-movable carriage 201b are examples of the "movable carriage".

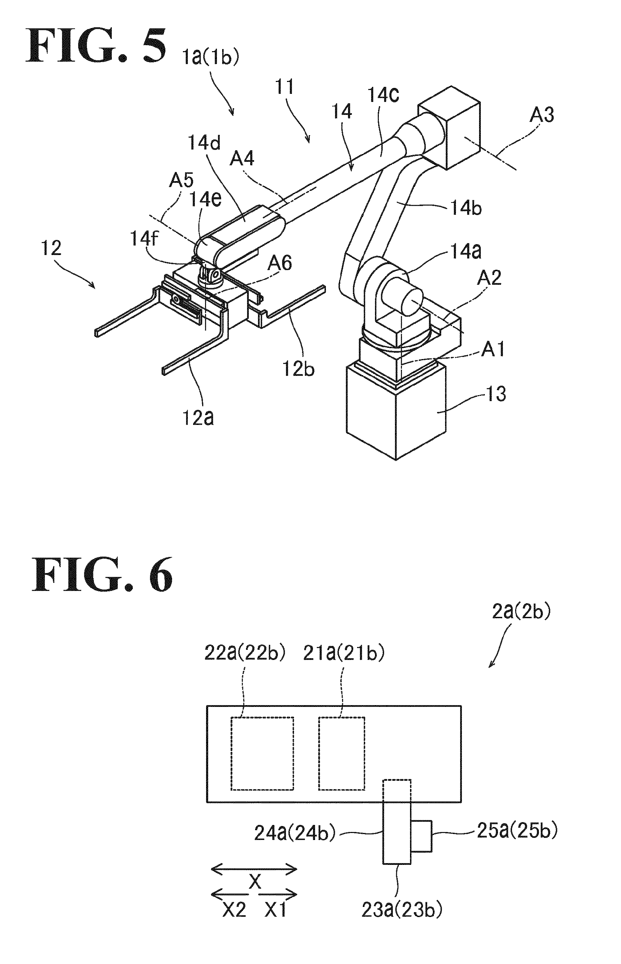

Also as shown in FIG. 5, the robot 1a includes a robot main body 11 and a robot hand 12. The robot hand 12 is mounted to a distal end of the robot main body 11 to hold the workpiece 200. The robot main body 11 includes a base 13 and a robot arm 14.

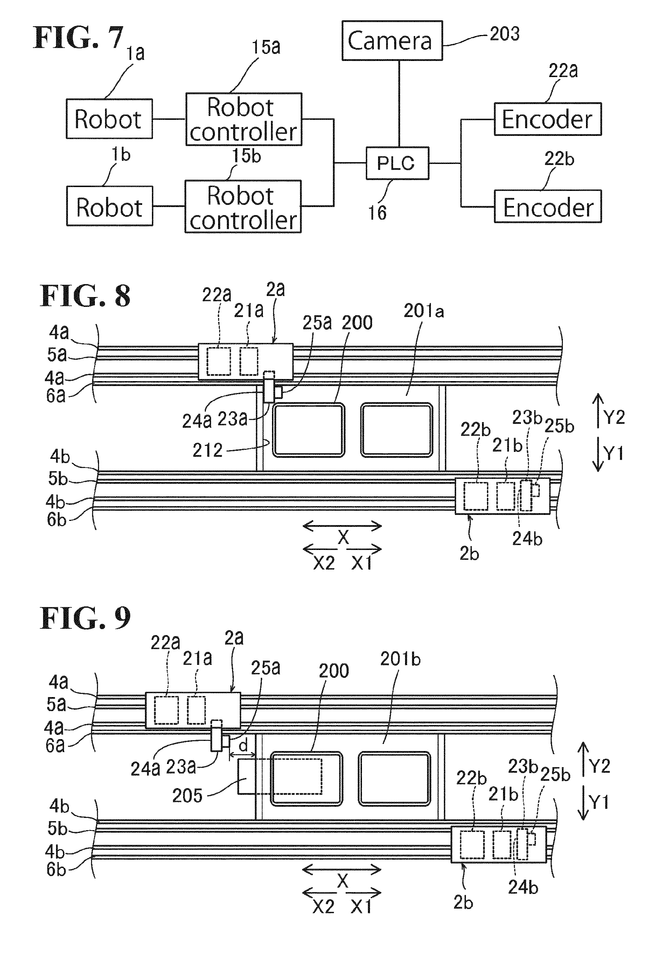

The base 13 is secured to an installation surface. The robot arm 14 according to this embodiment has six degrees of freedom. The robot arm 14 includes a plurality of arm structures. An arm structure 14a is coupled to the base 13 in a rotatable manner about a rotation axis A1, which is perpendicular to the installation surface. An arm structure 14b is coupled to the arm structure 14a in a rotatable manner about a rotation axis A2, which is perpendicular to the rotation axis A1. An arm structure 14c is coupled to the arm structure 14b in a rotatable manner about a rotation axis A3, which is parallel to the rotation axis A2. An arm structure 14d is coupled to the arm structure 14c in a rotatable manner about a rotation axis A4, which is perpendicular to the rotation axis A3. An arm structure 14e is coupled to the arm structure 14d in a rotatable manner about a rotation axis A5, which is perpendicular to the rotation axis A4. An arm structure 14f is coupled to the arm structure 14e in a rotatable manner about a rotation axis A6, which is perpendicular to the rotation axis A5. It is noted that "parallel" and "perpendicular", as used herein, are not only intended to mean precisely "parallel" and "perpendicular", respectively, but also intended more broadly to encompass slight differences from being "parallel" or "perpendicular". Each of the rotation axes A1 to A6 is equipped with a servo motor (joint). Each servo motor includes an encoder. The encoder detects a rotation position of the servo motor. Also each servo motor is coupled to the robot controller 15a (see FIG. 7). Each servo motor operates based on a command from the robot controller 15a. The number of movable joints (that is, degrees of freedom) of the robot arm 14 will not be limited to six degrees of freedom. The robot arm may have any other number of degrees of freedom as necessary.

The robot hand 12 is mounted to a distal end of the robot arm 14. Also, the robot hand 12 is equipped with grippers 12a and 12b to hold the workpiece 200. In plan view, the grippers 12a and 12b extend in opposite directions with respect to the center of the robot hand 12 (which is the portion of the robot hand 12 coupled to the arm structure 14f).

The robot 1b is similar in configuration to the robot 1a.

Also as shown in FIG. 6, the synchronous movable body 2a includes a motor 21a and an encoder 22a. Here, in this embodiment, the synchronous movable body 2a includes a protrusion 23a, in addition to the motor 21a and the encoder 22a. The protrusion 23a synchronizes with the carriage 201. In this embodiment, the protrusion 23a has a rectangular parallelepiped shape. Also, the protrusion 23a is capable of protruding over the runway 3 for the carriage 201 (see FIGs. 8 and 9) and is capable of withholding into the carriage 201 (see the synchronous movable body 2b of FIGs. 8 and 9). The protrusion 23a protrudes when the protrusion 23a synchronizes with the carriage 201, while the protrusion 23a withholds into the carriage 201 after the end of the synchronization with the carriage 201 (that is, while the protrusion 23a is waiting for the next carriage 201, as described later). The encoder 22a and the protrusion 23a are respectively examples of the "position detector" and the "synchronization member".

Also in this embodiment, the protrusion 23a includes a contact portion 24a on one side (that is, on the arrow X2 direction side) of the protrusion 23a in the moving direction of the carriage 201. The contact portion 24a is to contact the carriage 201. The protrusion 23a includes a distance measurement device 25a on the other side (that is, on the arrow X1 direction side) of the protrusion 23a. The distance measurement device 25a measures a distance to the carriage 201. The contact portion 24a is a planar side surface of the protrusion 23a on the arrow X2 direction side. Examples of the distance measurement device 25a include, but are not limited to, a distance sensor to emit laser light to the carriage 201 so as to measure the distance between the distance measurement device 25a (that is, the synchronous movable body 2a) and the carriage 201.

Also in this embodiment, based on the rotation position of the motor 21a, the encoder 22a detects the position of the carriage 201 on the runway 3 for the carriage 201. Specifically, based on the rotation position of the motor 21a, the encoder 22a detects the position of the synchronous movable body 2a on the guides 4a (that is, on the rack 5a). The encoder 22a outputs a detection signal into the PLC (Programmable Logic Controller) 16 (see FIG. 7). The PLC 16 recognizes the position of the synchronous movable body 2a as the position of the carriage 201 on the runway 3.

The synchronous movable body 2b includes a motor 21b, an encoder 22b, a protrusion 23b, a contact portion 24b, and a distance measurement device 25b. The synchronous movable body 2b is similar in configuration to the synchronous movable body 2a. The encoder 22b and the protrusion 23b are respectively examples of the "position detector" and the "synchronization member".

Also in this embodiment, as shown in FIGs. 8 and 9, while the synchronous movable body 2a (the synchronous movable body 2b) is moving along the runway 3 for the carriage 201 synchronously with the movement of the carriage 201, the synchronous movable body 2b (the synchronous movable body 2a) waits at an entrance side of the runway 3 (which is on the arrow X1 direction side) for the next carriage 201 to enter the runway 3 for the carriage 201. After the synchronous movable body 2a (the synchronous movable body 2b) ends the synchronization with the movement of the carriage 201 (that is, after the robots 1a and 1b complete taking out (depalletizing) the workpiece 200), the synchronous movable body 2a (the synchronous movable body 2b) moves to the entrance side of the runway 3 (which is on the arrow X1 direction side) from which the next carriage 201 enters the runway 3 for the carriage 201.

As shown in FIG. 7, the robot 1a (1b) is coupled to the robot controller 15a (15b) and to the PLC 16. The PLC 16 is coupled to the encoder 22a (22b) of the synchronous movable body 2a (synchronous movable body 2b). The PLC 16 is coupled to the camera 203 (see FIG. 1) to capture an image of an arrangement state of the workpiece 200 placed on the carriage 201. The PLC 16 is an example of the "controller".

Here, in this embodiment, the PLC 16 controls the robots 1a and 1b to take the workpiece 200 out of the carriage 201 synchronously with the movement of the carriage 201 based on the detected position of the carriage 201 on the runway 3. Specifically, the PLC 16 controls the robots 1a and 1b to take a plurality of workpieces 200 out of the carriage 201 synchronously with the movement of the carriage 201 in motion.

Also in this embodiment, as shown in FIGs. 8 and 9, the PLC 16 controls the protrusion 23a (23b) of the synchronous movable body 2a (2b) to move the synchronous movable body 2a (2b) along the runway of the carriage 201 synchronously with the movement of the carriage 201. Specifically, as shown in FIG. 8, when the carriage 201 is the non-self-movable carriage 201a, which is incapable of self-movement, the PLC 16 controls the synchronous movable body 2a (2b) to move with the contact portion 24a (24b) of the protrusion 23a (23b) in contact with the non-self-movable carriage 201a (more specifically, with an inner surface of the wall 212) from the arrow X1 direction. In this manner, the PLC 16 controls the synchronous movable body 2a (2b) to move along the runway 3 synchronously with the movement of the non-self-movable carriage 201a.

As shown in FIG. 9, when the carriage 201 is the self-movable carriage 201b, which is capable of self-movement, the PLC 16 controls the synchronous movable body 2a (2b) to move while keeping the distance between the self-movable carriage 201b and the protrusion 23a (23b) constant (that is, a constant distance d) based on the distance to the self-movable carriage 201b measured by the distance measurement device 25a (25b). In this manner, the PLC 16 controls the synchronous movable body 2a (2b) to move along the runway 3 synchronously with the movement of the self-movable carriage 201b.

Also as shown in FIG. 2, the synchronous movable bodies 2a and 2b (the robots 1a and 1b) are subjected to synchronization within an area 101. In the area 101, the robot system 100 (specifically, the robots 1a and 1b and the synchronous movable bodies 2a and 2b) are disposed. Each of the robots 1a and 1b has a movable range in which each of the robots 1a and 1b can take the workpiece 200 out of the carriage 201 in motion within the area 101.

Next, by referring to FIGs. 8 to 12, operations of the robot system 100 according to the embodiment (that is, controlling operations by the PLC 16) will be described. In the initial state, the synchronous movable bodies 2a and 2b are waiting on the entrance side of the area 101 from which the carriage 201 enters runway 3 (that is, on the arrow X1 direction side).

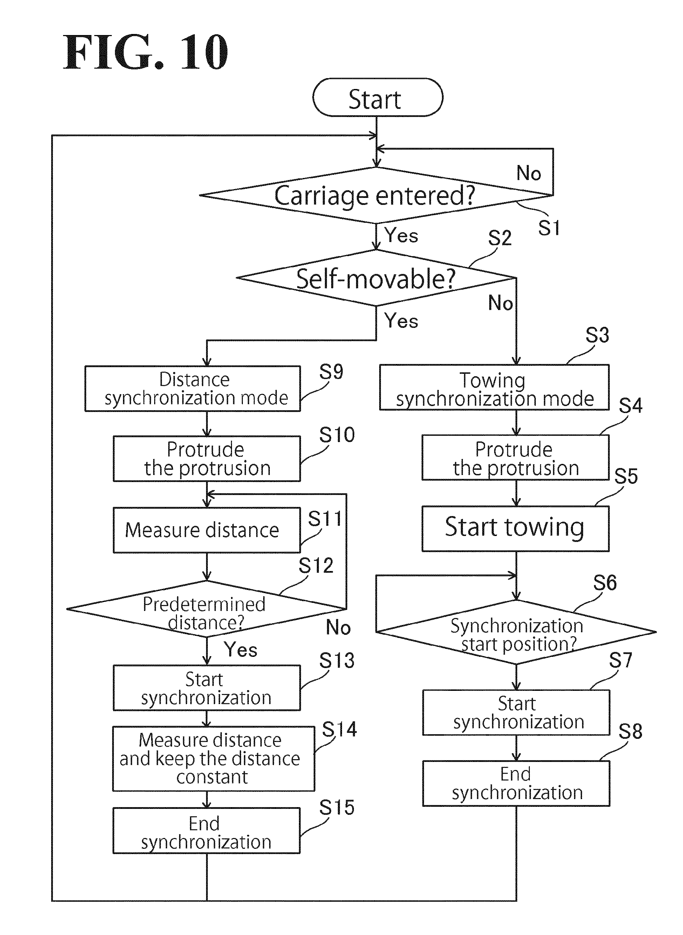

First, as shown in FIG. 10, at step S1, a determination is made as to whether the carriage 201 has entered the area 101 (see FIG. 2). When at step S1 a determination is made that the carriage 201 has entered the area 101, the processing proceeds to step S2. Information indicating whether the carriage 201 has entered the area 101 is input into the PLC 16 from the outside of the robot system 100 (or, a detector is provided in the robot system 100 to detect whether the carriage 201 has entered). Then, at step S2, a determination is made as to whether the carriage 201 having entered the area 101 is the self-movable carriage 201b. Information indicating whether the carriage 201 is the self-movable carriage 201b or the non-self-movable carriage 201a is provided to the PLC 16 from the outside of the robot system 100. When at step S2 a determination is made that the carriage 201 is not the self-movable carriage 201b (that is, the carriage 201 is the non-self-movable carriage 201a), the processing proceeds to step S3. Then, at step S3, the current mode is recognized as towing synchronization mode (which is a mode in which the non-self-movable carriage 201a is towed by the synchronous movable bodies 2a and 2b). Then, the processing proceeds to step S4.

Then, at step S4, as shown in FIG. 8, the protrusion 23a of the synchronous movable body 2a protrudes over the runway 3 for the carriage 201. Then, the synchronous movable body 2a moves in the arrow X2 direction. At the same time, the protrusion 23a (more specifically, the contact portion 24a of the protrusion 23a) of the synchronous movable body 2a is brought into contact with the inner surface of the wall 212 of the non-self-movable carriage 201a. Thus, the non-self-movable carriage 201a starts being towed at step S5.

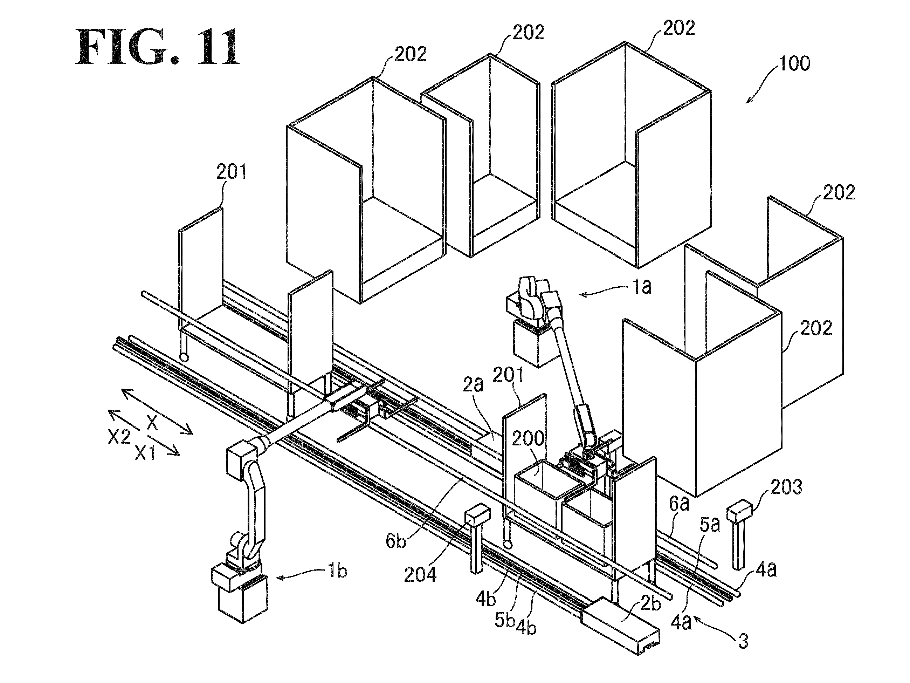

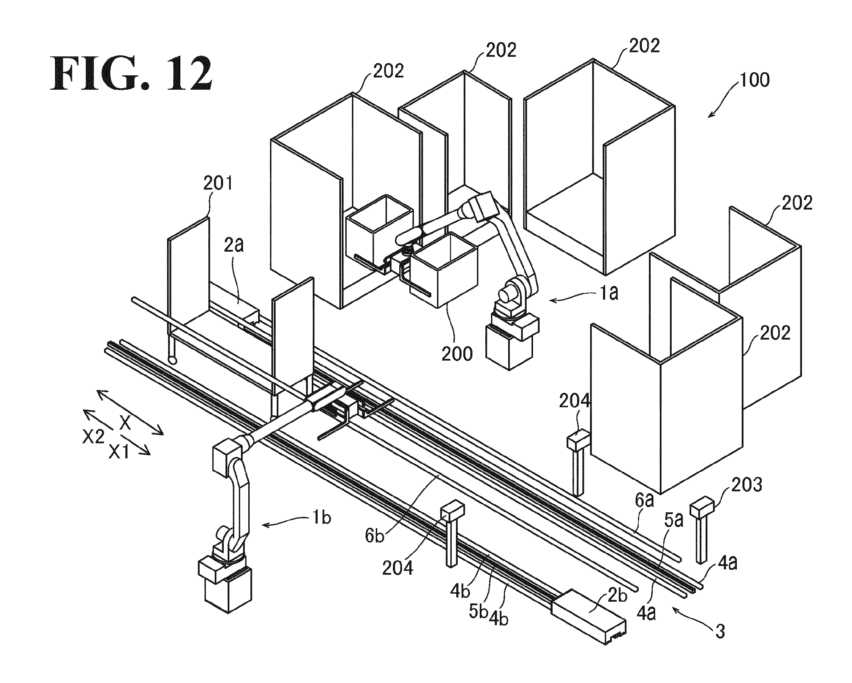

Next, at step S6, a determination is made as to whether the non-self-movable carriage 201a has reached a synchronization start position. Specifically, a determination is made as to whether the non-self-movable carriage 201a has reached the synchronization start position on the runway 3 based on whether light emitted from the sensor 204 (see FIGs. 1 and 2) has been shielded by the non-self-movable carriage 201a. Then, when a determination is made that the non-self-movable carriage 201a has reached the synchronization start position on the runway 3 at step S6, then at step S7, the robots 1a and 1b take the workpieces 200 out of the non-self-movable carriage 201a synchronously with the movement of the non-self-movable carriage 201a, as shown in FIG. 11. The robots 1a and 1b take out the workpieces 200 based on an image of the non-self-movable carriage 201a captured by the camera 203 in advance, that is, captured when the non-self-movable carriage 201a entered the area 101 with the workpieces 200 placed on the non-self-movable carriage 201a. Then, as shown in FIG. 12, the robots 1a and 1b place the workpieces 200 thus taken onto the stands 202.

After all the workpieces 200 have been taken out of the non-self-movable carriage 201a, then at step S8, the synchronization of the synchronous movable body 2a with the non-self-movable carriage 201a (that is, work of the robots 1a and 1b with respect to the workpieces 200) ends. The work of the robots 1a and 1b with respect to the workpieces 200 (specifically, the taking-out of the workpieces 200) ends before the non-self-movable carriage 201a leaves the area 101. The synchronous movable body 2a tows the non-self-movable carriage 201a until the non-self-movable carriage 201a leaves the area 101 (or, until a part of the non-self-movable carriage 201a leaves the area 101). Then, the synchronous movable body 2a returns to the entrance side of the area 101 (on the arrow X1 direction side) and waits at the entrance side.

When at step S2 a determination is made that the carriage 201 is the self-movable carriage 201b, the processing proceeds to step S9. At step S9, the current mode is recognized as distance synchronization mode (that is, a mode in which the distance between the self-movable carriage 201b and the synchronous movable body 2a is kept constant, and in which the distance between the self-movable carriage 201b and the synchronous movable body 2b is kept constant). Then, the processing proceeds to step S10.

Then, at step S10, as shown in FIG. 9, the self-movable carriage 201b moves in the arrow X2 direction. On the front side (in the arrow X2 direction) of the self-movable carriage 201b, the protrusion 23a of the synchronous movable body 2a protrudes over the runway 3 for the self-movable carriage 201b. Then, at step S11, the distance measurement device 25a emits laser light to the self-movable carriage 201b to measure the distance to the self-movable carriage 201b. Then, at step S12, a determination is made as to whether the distance to the self-movable carriage 201b has reached the predetermined distance d set in advance (that is, whether the self-movable carriage 201b has come as close to the protrusion 23a as the predetermined distance d).

Then, when at step S 12 a determination is made that the distance to the self-movable carriage 201b has reached the predetermined distance d, then at step S 13, the robots 1a and 1b take the workpieces 200 out of the self-movable carriage 201b synchronously with the movement of the self-movable carriage 201b, as shown in FIG. 11. The robots 1a and 1b take out the workpieces 200 based on an image of the self-movable carriage 201b captured by the camera 203 in advance, that is, captured when the self-movable carriage 201b entered the area 101 with the workpieces 200 placed on the self-movable carriage 201b. Then, as shown in FIG. 12, the robots 1a and 1b place the workpieces 200 thus taken onto the stands 202. At step S 14, also after the synchronization has started, the distance to the self-movable carriage 201b is measured, and the synchronous movable body 2a moves so as to keep the distance to the self-movable carriage 201b at the constant distance d.

After all the workpieces 200 have been taken out of the self-movable carriage 201b, then at step S 15, synchronization of the synchronous movable body 2a with the self-movable carriage 201b (that is, work of the robots 1a and 1b with respect to the workpieces 200) ends. Then, the synchronous movable body 2a moves to the entrance side (that is, to the arrow X1 direction side) of the area 101 and waits at the entrance side.

When the next carriage 201 enters the runway 3 for the carriage 201 (that is, the area 101), the other synchronous movable body 2b starts synchronization with the carriage 201. In other words, the synchronous movable bodies 2a and 2b alternate when they synchronize with the carriage 201.

As has been described hereinbefore, in this embodiment, the synchronous movable body 2a (2b) moves along the predetermined runway 3 (on which the carriage 201 moves) synchronously with the movement of the carriage 201. The synchronous movable body 2a (2b) includes the encoder 22a (22b) to detect the position of the carriage 201 on the predetermined runway 3. This ensures detection of the position of the carriage 201 by the synchronous movable body 2a (2b) even when the carriage 201 is incapable of detecting of its own position. This, in turn, ensures that the robots 1a and 1b readily perform a predetermined work with respect to the workpieces 200 (specifically, the taking-out of the workpieces 200) placed on the carriage 201 synchronously with the movement of the carriage 201.

Also in this embodiment, as described above, the synchronous movable body 2a (2b) includes, in addition to the encoder 22a (22b), the protrusion 23a (23b) to synchronize with the carriage 201. The PLC 16 controls the protrusion 23a (23b) to move the synchronous movable body 2a (2b) along the predetermined runway 3 synchronously with the movement of the carriage 201. The use of the protrusion 23a (23b) facilitates the movement of the synchronous movable body 2a (2b) synchronously with the movement of the carriage 201. When the synchronous movable body 2a (2b) does not synchronize with the movement of the carriage 201, the protrusion 23a (23b) withholds into the synchronous movable body 2a (2b). This eliminates or minimizes contact between the synchronous movable body 2a (2b) and the carriage 201.

Also in this embodiment, as described above, the PLC 16 controls the synchronous movable body 2a (2b) to move with the protrusion 23a (23b) in contact with the non-self-movable carriage 201a, so as to control the synchronous movable body 2a (2b) to move along the predetermined runway 3 synchronously with the movement of the non-self-movable carriage 201a. This ensures that the synchronous movable body 2a (2b) readily moves the non-self-movable carriage 201a.

Also in this embodiment, as described above, the distance measurement device 25a (25b) is disposed on the protrusion 23a (23b). The PLC 16 controls the synchronous movable body 2a (2b) to move while keeping the distance between the self-movable carriage 201b and the protrusion 23a (23b) constant based on the distance to the self-movable carriage 201b measured by the distance measurement device 25a (25b). In this manner, PLC 16 controls the synchronous movable body 2a (2b) to move along the predetermined runway 3 synchronously with the movement of the self-movable carriage 201b. Generally, the self-movable carriage 201b is designed to automatically make a stop when the self-movable carriage 201b collides with some object. In this respect, the synchronous movable body 2a (2b) moves in a non-contact state in which the self-movable carriage 201b and the protrusion 23a (23b) are kept at a constant distance from each other. This eliminates or minimizes contact between the self-movable carriage 201b and the protrusion 23a (23b). This, in turn, ensures that the synchronous movable body 2a (2b) readily move synchronously with the movement of the self-movable carriage 201b without stopping the self-movable carriage 201b.

Also in this embodiment, as described above, the protrusion 23a (23b) includes the contact portion 24a (24b) and the distance measurement device 25a (25b). The contact portion 24a (24b) is disposed on one side of the protrusion 23a (23b) in the moving direction of the carriage 201 to contact the carriage 201. The distance measurement device 25a (25b) is disposed on the other side of the protrusion 23a (23b) to measure the distance to the carriage 201. This ensures that the contact portion 24a (24b) contacts the carriage 201 from behind the carriage 201 to tow the carriage 201, and that the distance measurement device 25a (25b) measures the distance to the carriage 201 from the front side of the carriage 201. Additionally, by providing the protrusion 23a (23b) with the contact portion 24a (24b) on one side and the distance measurement device 25a (25b) on the other side (that is, providing one protrusion 23a (23b) with the contact portion 24a (24b) and the distance measurement device 25a (25b)), a simpler configuration is ensured, as opposed to the case where the contact portion 24a (24b) and the distance measurement device 25a (25b) are disposed on separate protrusions.

Also in this embodiment, as described above, while the synchronous movable body 2a (or the synchronous movable body 2b) is moving along the predetermined runway 3 synchronously with the movement of the carriage 201, the synchronous movable body 2b (as well as the synchronous movable body 2a) waits at the entrance side of the predetermined runway 3 for the next carriage 201 to enter the predetermined runway 3. Thus, after the synchronization of the synchronous movable body 2a (or the synchronous movable body 2b) with the previous carriage 201 has ended, the synchronous movable body 2b (the synchronous movable body 2a) synchronizes with the next carriage 201. This eliminates the need for waiting for the synchronous movable body 2a (or the synchronous movable body 2b) to return to the entrance side of the area 101, resulting in shortened tact time.

Also in this embodiment, as described above, the PLC 16 controls the robots 1a and 1b to take the workpieces 200 out of the carriage 201 synchronously with the movement of the carriage 201 based on the detected position of the carriage 201 on the predetermined runway 3. This ensures that the robots 1a and 1b readily take the workpieces 200 out of the carriage 201 synchronously with the movement of the carriage 201.

Also in this embodiment, as described above, the PLC 16 the encoder 22a (22b) to detect the position of the carriage 201 on the predetermined runway 3 based on the rotation position of the motor 21a (21b). This facilitates detection of the position of the synchronous movable body 2a (2b), and facilitates detection of the position of the carriage 201.

Obviously, numerous modifications and variations of the present disclosure are possible in light of the above teachings. It is therefore to be understood that within the scope of the appended claims, the present disclosure may be practiced otherwise than as specifically described herein.

For example, in the above-described embodiment, the robots have been illustrated as taking out the workpieces out of the self-movable carriage. The robots may also perform other work than taking out the workpieces out of the self-movable carriage (examples including, but not limited to, placing the workpieces onto the self-movable carriage, and cutting the workpieces).

In the above-described embodiment, the "controller" has been illustrated as the PLC. A specific configuration of the "controller", that is, the control system, is selectable conveniently. An example of the "controller" is a robot controller. Other examples of the "controller" include a PLC and a robot controller, and any of versatile controllers. It is also possible to use all of the foregoing.

In the above-described embodiment, the protrusion protrudes from the synchronous movable body and contacts the non-self-movable carriage, thereby synchronizing the synchronous movable body with the movement of the non-self-movable carriage. It is also possible to use a configuration other than the contact of the protrusion with the non-self-movable carriage to synchronize the synchronous movable body with the movement of the non-self-movable carriage (examples including, but not limited to, use of magnetic force of an electromagnet to move the non-self-movable carriage).

In the above-described embodiment, a single protrusion has been illustrated as being provided with the contact portion, which is to contact the self-movable carriage, and provided with the distance measurement device. The contact portion, which is to contact the self-movable carriage, and the distance measurement device may also be disposed on separate protrusions.

In the above-described embodiment, the distance measurement device has been illustrated as being disposed on the protrusion. The distance measurement device may also be disposed at a portion other than the protrusion.

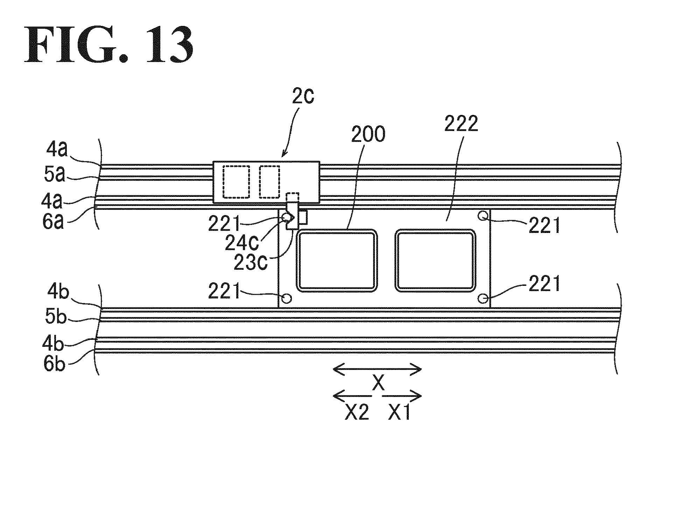

In the above-described embodiment, the contact portion to contact the carriage has been illustrated as being a planar side surface of the protrusion. Another possible example is a modification as shown in FIG. 13, where the carriage is a carriage 222 with pillars 221 at four corners. In this case, a protrusion 23c of a synchronous movable body 2c has a contact portion 24c with a claw shape (a V-shaped concave in plan view) that is to contact the carriage 222 (a pillar 221). This ensures stable towing of the self-movable carriage 222. The protrusion 23c is an example of the "synchronization member".

In the above-described embodiment, two synchronous movable bodies have been illustrated. It is also possible to provide one or more than three synchronous movable bodies.

In the above-described embodiment, two robots have been illustrated. It is also possible to provide one or more than three robots.
- 1a, 1b: Robot
- 2a, 2b, 2c: Synchronous movable body (first synchronous movable body and second synchronous movable body)
- 3: Runway
- 16 PLC: (controller)
- 21a, 21b: Motor
- 22a, 22b: Encoder (position detector)
- 23a, 23b, 23c: Protrusion (synchronization member)
- 24a, 24b, 24c: Contact portion
- 25a, 25c: Distance measurement device
- 100: Robot system
- 200: Workpiece
- 201, 222: Carriage
- 201a: Non-self-movable carriage (carriage)
- 201b: Self-movable carriage (carriage)

## Claims

1. A robot system 100, **characterized by**:
a robot 1a, 1b configured to perform a predetermined work with respect to a workpiece placed on at least one carriage 201 of one or more carriages moving along a predetermined runway 3;
a synchronous movable body 2a, 2b configured to move along the predetermined runway 3 synchronously with movement of the at least one carriage 201, the synchronous movable body 2a, 2b comprising a position detector 22a, 22b configured to detect a position of the at least one carriage 201 on the predetermined runway 3; and
a controller 15a, 15b configured to control the robot 1a, 1b to perform the predetermined work with respect to the workpiece placed on the at least one carriage 201 synchronously with the movement of the at least one carriage 201 based on the detected position of the at least one carriage 201 on the predetermined runway 3.

2. The robot system 100 according to claim 1,
wherein the synchronous movable body 2a, 2b further comprises a synchronization member 23a, 23b, 23c configured to synchronize with the at least one carriage 201, and
wherein the controller 15a, 15b is configured to control the synchronization member 23a, 23b, 23c to move the synchronous movable body 2a, 2b along the predetermined runway 3 synchronously with the movement of the at least one carriage 201.

3. The robot system 100 according to claim 2,
wherein the at least one carriage 201 is a non-self-movable carriage 201a configured to be driven, and
wherein the controller 15a, 15b is configured to control the synchronous movable body 2a, 2b to move with the synchronization member 23a, 23b, 23c in contact with the non-self-movable carriage 201a, so as to control the synchronous movable body 2a, 2b to move along the predetermined runway 3 synchronously with the movement of the non-self-movable carriage 201a.

4. The robot system 100 according to claim 3,
wherein the synchronization member 23a, 23b, 23c comprises a protrusion 23a, 23b, 23c configured to protrude over the predetermined runway 3, and
wherein the controller 15a, 15b is configured to control the synchronous movable body 2a, 2b to move with the protrusion 23a, 23b, 23c in contact with the non-self-movable carriage 201a, so as to control the synchronous movable body 2a, 2b to move along the predetermined runway 3 synchronously with the movement of non-self-movable carriage 201a.

5. The robot system 100 according to claim 2,
wherein the at least one carriage 201 is a self-movable carriage 201b having propeller, wherein the synchronous movable body 2a, 2b further comprises a distance measurement device 25a, 25b configured to measure a distance to the self-movable carriage 201b, and
wherein the controller 15a, 15b is configured to control the synchronous movable body 2a, 2b to move while keeping a distance between the self-movable carriage 201b and the synchronization member 23a, 23b, 23c constant based on the distance to the self-movable carriage 201b measured by the distance measurement device 25a, 25b, so as to control the synchronous movable body 2a, 2b to move along the predetermined runway 3 synchronously with the movement of the self-movable carriage 201b.

6. The robot system 100 according to claim 5,
wherein the synchronization member 23a, 23b, 23c comprises a protrusion 23a, 23b, 23c configured to protrude over the predetermined runway 3,
wherein the distance measurement device 25a, 25b is disposed on the protrusion 23a, 23b,23c,and
wherein the controller 15a, 15b is configured to control the synchronous movable body 2a, 2b to move while keeping the distance between the self-movable carriage 201b and the protrusion 23a, 23b, 23c constant based on the distance to the self-movable carriage 201b measured by the distance measurement device 25a, 25b, so as to control the synchronous movable body 2a, 2b to move along the predetermined runway 3 synchronously with the movement of the self-movable carriage 201b.

7. The robot system 100 according to any one of claims 2 to 6,
wherein the synchronization member 23a, 23b, 23c comprises a protrusion 23a, 23b, 23c configured to protrude over the predetermined runway 3, and
wherein the protrusion 23a, 23b, 23c comprises
a contact portion 24a, 24b, 24c on one side of the protrusion 23a, 23b, 23c in a moving direction of the at least one carriage 201 to contact the at least one carriage 201, and
a distance measurement device 25a, 25b on another side of the protrusion 23a, 23b, 23c to measure a distance to the at least one carriage 201.

8. The robot system 100 according to any one of claims 1 to 7,
wherein the synchronous movable body 2a, 2b comprises a first synchronous movable body 2a, 2b and a second synchronous movable body 2a, 2b,
wherein the first synchronous movable body 2a, 2b is configured to move along the predetermined runway 3 synchronously with the movement of the at least one carriage 201, and
wherein while the first synchronous movable body 2a, 2b is moving along the predetermined runway 3 synchronously with the movement of the at least one carriage 201, the second synchronous movable body 2a, 2b is configured to wait at an entrance side of the predetermined runway 3 for a next carriage 201 to enter the predetermined runway 3.

9. The robot system according to any one of claims 1 to 8, wherein the controller 15a, 15b is configured to control the robot 1a, 1b to take the workpiece out of the at least one carriage 201 synchronously with the movement of the carriage 201 based on the detected position of the at least one carriage 201 on the predetermined runway 3.

10. The robot system 100 according to any one of claims 1 to 9,
wherein the synchronous movable body 2a, 2b further comprises a motor configured to move the synchronous movable body 2a, 2b, and
wherein the controller 15a, 15b is configured to control the position detector 22a, 22b to detect the position of the carriage 201 on the predetermined runway 3 based on a rotation position of the motor.

11. A robot working method, **characterized by**:
moving a synchronous movable body 2a, 2b along a predetermined runway 3 synchronously with movement of a carriage 201 along the predetermined runway 3 so as to detect a position of the carriage 201 on the predetermined runway 3, the synchronous movable body 2a, 2b comprising a position detector 22a, 22b; and
controlling a robot 1a, 1b to perform a predetermined work with respect to a workpiece placed on the carriage 201 synchronously with the movement of the carriage 201 based on the detected position of the carriage 201 on the predetermined runway 3.
